# DEMANDE DE BREVET EUROPEEN

(11) **EP 1 914 132 A1**
(43) Date de publication de la demande: **23.04.2008**
(21) Numéro de dépôt: 07301440.9
(22) Date de dépôt: 08.10.2007
(51) Int. Cl.: B60S 1/60

(54) **Projecteur de véhicule automobile associé à un dispositif de lavage de vitre, et ensemble d'éclairage comprenant un tel projecteur**

(30) Priorité: 18.10.2006 FR 0654344
(71) Demandeur: PEUGEOT CITROËN AUTOMOBILES SA, 78140 Velizy-Villacoublay (FR)
(72) Inventeur: Jeuffe, Gérard, 78580 Bazemont (FR); Cahen, Thierry, 92150 Suresnes (FR); Claret, Davy, 91620 Nozay (FR); Deschamps, Maurice, 92240 Malakoff (FR); Duceux, Stéphane, 78340 Les Clayes sous Bois (FR); Larribeau, Nathalie, 78140 Vélizy Villacoublay (FR)

(57) **Abrégé**

Ce projecteur comporte :
- au moins une source lumineuse (9),
- un échangeur de chaleur (15) associé à ladite source lumineuse (9) pour évacuer de la chaleur produite par ladite source en fonctionnement, et
- une vitre (11) au travers de laquelle est projetée la lumière issue de la source lumineuse (9) en fonctionnement.

Le projecteur comprend en outre un réservoir (17) de fluide d'un dispositif (5) de lavage de la vitre, l'échangeur de chaleur (15) étant agencé dans la région du réservoir (17), de telle sorte à évacuer de la chaleur de la source lumineuse (9) en fonctionnement vers le fluide de lavage contenu dans le réservoir (17), et ainsi chauffer le fluide de lavage au moyen de la chaleur dégagée par la source lumineuse (9) en fonctionnement.

L'invention vise également un ensemble d'éclairage comprenant un tel projecteur et le dispositif de lavage.

## Description

La présente invention concerne un projecteur de véhicule automobile comportant:
- au moins une source lumineuse,
- un échangeur de chaleur associé à ladite source lumineuse pour évacuer de la chaleur produite par ladite source en fonctionnement, et
- une vitre au travers de laquelle est projetée la lumière issue de la source lumineuse en fonctionnement.

L'utilisation d'un échangeur de chaleur est en particulier rendue nécessaire lorsque la source lumineuse est constituée d'une diode électroluminescente (ou LED). Dans le cas d'un système d'éclairage à LED, la lumière émise est « froide » et ne crée donc pas d'échauffement de la vitre.

Ce type de source lumineuse présente un grand nombre d'avantages, mais un inconvénient majeur réside dans le fait que le fonctionnement de la source ne permet pas d'éliminer le givre ou la neige pouvant se déposer sur la vitre, de sorte qu'il existe un risque accru de mauvaise visibilité de nuit par basses températures.

L'invention a pour but de remédier à cet inconvénient, sans accroissement sensible du nombre de pièces et du coût de fabrication du projecteur.

A cet effet, l'invention a pour objet un projecteur du type exposé précédemment, qui comprend en outre un réservoir de fluide d'un dispositif de lavage de la vitre, l'échangeur de chaleur étant agencé dans la région du réservoir, de telle sorte à évacuer de la chaleur de la source lumineuse en fonctionnement vers le fluide de lavage contenu dans le réservoir, et ainsi chauffer le fluide de lavage au moyen de la chaleur dégagée par la source lumineuse en fonctionnement.

Grâce à cette disposition, il est possible d'utiliser, dans un système d'éclairage de véhicule, des sources lumineuses à lumière « froide », et d'obtenir la fonte de givre ou de neige déposés sur la vitre, sans adjonction de moyens de chauffage spécialement dédiés à cette fonction.

Suivant d'autres caractéristiques de l'invention :
- le projecteur comprend un boîtier dans lequel sont logés la source lumineuse, l'échangeur de chaleur, et le réservoir ;
- la source lumineuse comprend au moins une diode électroluminescente ;
- le projecteur comprend une plaque-support ayant des faces opposées, sur lesquelles sont fixés respectivement la source lumineuse et l'échangeur de chaleur.

Selon un premier mode de réalisation de l'invention, l'échangeur de chaleur est au moins partiellement disposé à l'intérieur du réservoir, la plaque-support étant fixée à des parois périphériques du réservoir, et définissant une paroi de fermeture du réservoir, étanche au fluide de lavage.

Selon un deuxième mode de réalisation de l'invention, l'échangeur de chaleur est agencé extérieurement au réservoir, et comprend une série d'ailettes espacées l'une de l'autre, le réservoir ayant une paroi de forme complémentaire de l'échangeur de chaleur, coopérant par emboîtement avec la série d'ailettes.

L'invention vise en outre un ensemble d'éclairage de véhicule automobile, caractérisé en ce qu'il comprend un projecteur tel que défini ci-dessus, et un dispositif de lavage comportant le réservoir de fluide de lavage, au moins un gicleur prévu pour être agencé en vis-à-vis de la vitre dudit projecteur, et au moins un conduit d'amenée de fluide de lavage, reliant le réservoir au gicleur.

Des modes particuliers de réalisation de l'invention vont maintenant être décrits plus en détail en référence aux dessins annexés, sur lesquels :
- la Figure 1 est une vue schématique en coupe d'un projecteur conforme à un premier mode de réalisation de l'invention ; et
- la Figure 2 est une vue analogue illustrant un deuxième mode de réalisation de l'invention.

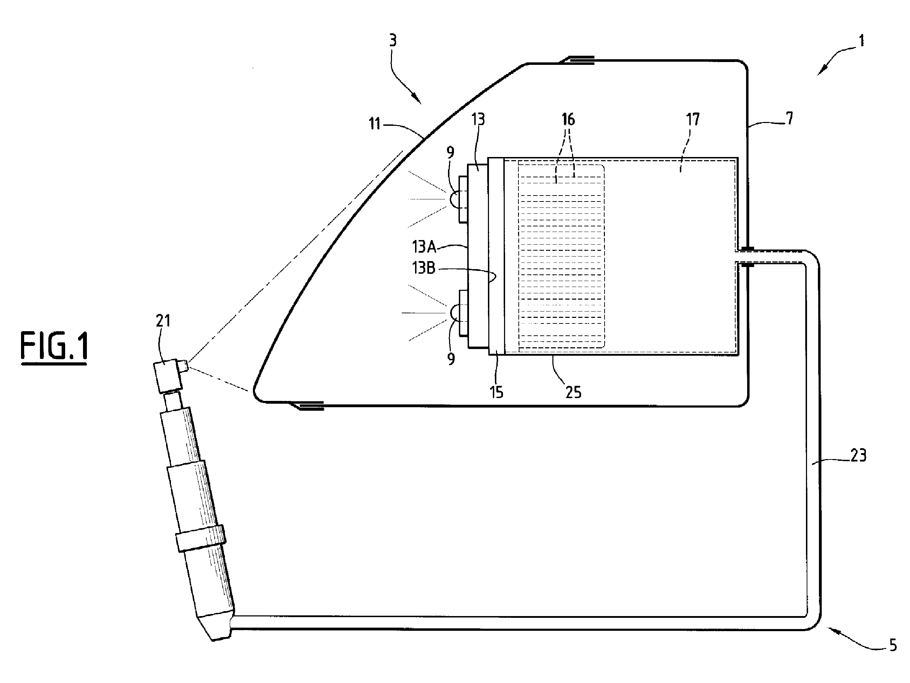

Sur la Figure 1, on a représenté schématiquement un ensemble d'éclairage 1 de véhicule automobile conforme à un premier mode de réalisation de l'invention, dans un plan sensiblement vertical et longitudinal du véhicule sur lequel il est supposé monté.

L'ensemble d'éclairage 1 comprend un projecteur 3 et un dispositif de lavage associé 5.

Le projecteur 3 comprend essentiellement un boîtier 7, des sources lumineuses 9, ici sous la forme de diodes électroluminescentes (ou LED), agencées à l'intérieur du boîtier 7, et une vitre 11 formant face avant de fermeture du boîtier 7.

Le projecteur 3 comprend en outre une plaque-support 13 ayant deux faces opposées 13A, 13B essentiellement planes, et un échangeur de chaleur 15.

Les sources lumineuses 9 sont fixées sur l'une 13A des faces de la plaque-support 13, tandis que l'échangeur de chaleur 15 est fixé sur la face opposée 13B. La plaque-support 13, et solidairement les sources lumineuses 9 et l'échangeur 15, sont fixés à l'intérieur du boîtier 7, éventuellement de façon réglable en position, de sorte que les sources lumineuses 9 sont tournées vers la vitre 11. La lumière issue des sources lumineuses 9 en fonctionnement est ainsi projetée au travers de la vitre 11.

Dans l'exemple représenté, l'échangeur de chaleur 15 est constitué d'un échangeur à ailettes 16 parallèles, s'étendant toutes de façon orthogonale à la plaque-support 13, et espacées l'une de l'autre.

Le projecteur 3 comprend en outre un réservoir 17 prévu pour recevoir un liquide de lavage de la vitre 11.

Le réservoir 17 appartient au dispositif de lavage 5, lequel comporte en outre une buse (ou gicleur) 21, prévue pour être agencée en vis-à-vis de la vitre 11 à l'extérieur du boîtier 7. Le dispositif de lavage 5 comprend de plus un conduit 23 d'amenée du liquide de lavage, connecté au réservoir 17, et reliant ce dernier au gicleur 21.

Le dispositif de lavage 5 comprend en outre une pompe adaptée pour déplacer du liquide de lavage dans le conduit 23 depuis le réservoir 17 vers le gicleur 21. Cette pompe n'est pas représentée sur la Figure.

Dans le premier mode de réalisation représenté sur la Figure 1, l'échangeur de chaleur 15 est agencé à l'intérieur du réservoir 17, la plaque-support étant fixée à des parois périphériques 25 du réservoir, de façon à définir une paroi de fermeture de ce dernier, étanche au liquide de lavage contenu dans le réservoir.

Ainsi, l'échangeur de chaleur 15 est partiellement ou totalement baigné dans le liquide de lavage.

On comprend que les sources lumineuses 9 en fonctionnement émettent un rayonnement lumineux au travers de la vitre 11, cette lumière étant dite « froide », tandis qu'elles dégagent de la chaleur en direction opposée, c'est-à-dire vers l'arrière du projecteur 3, au travers de la plaque-support 13.

Cette chaleur est dissipée dans le milieu extérieur par l'échangeur de chaleur 15. Du fait que l'échangeur de chaleur 15 est agencé dans la région du réservoir 17, plus précisément à l'intérieur du réservoir dans l'exemple de la Figure 1, la chaleur dégagée par les sources lumineuses 9 en fonctionnement est dissipée dans l'air et le liquide de lavage contenus dans le réservoir 17. C'est ainsi que le liquide de lavage est chauffé au moyen de la chaleur dégagée par les sources lumineuses 9 en fonctionnement.

On comprend que la chaleur ainsi absorbée par le liquide de lavage peut faire augmenter sensiblement la température de ce dernier, de sorte que, lorsque du liquide de lavage est projeté contre la vitre 11, il favorise la fonte et l'élimination de la neige ou du gel qui ont pu s'y déposer.

Quelles que soient les conditions climatiques et la présence ou l'absence d'un dépôt de neige ou de gel, les impuretés à nettoyer sur la vitre sont éliminées plus facilement et plus efficacement avec du liquide de lavage chauffé.

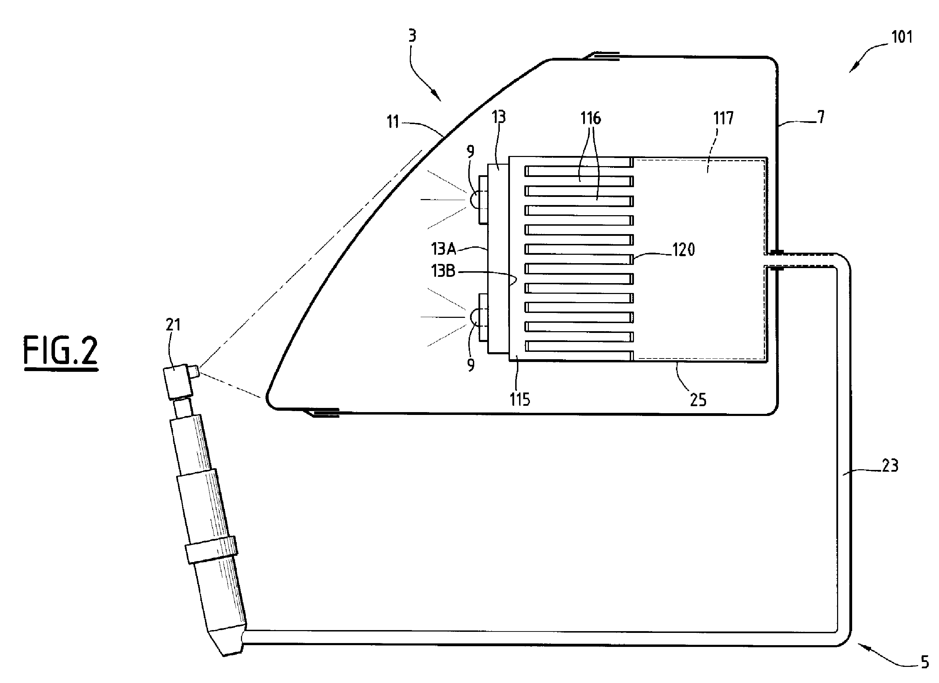

Sur la Figure 2, on a représenté, en coupe analogue à celle de la Figure 1, un ensemble d'éclairage 101 selon un deuxième mode de réalisation de l'invention.

Dans cet exemple, l'échangeur de chaleur 115 est agencé dans la région du réservoir 117 de liquide de lavage, mais contrairement à l'exemple précédent, à l'extérieur du réservoir 117 et au voisinage de ce dernier.

Selon ce deuxième mode de réalisation de l'invention, le réservoir 117 a une paroi 120 de forme complémentaire de celle de l'échangeur de chaleur 115, qui coopère par emboîtement avec la série d'ailettes parallèles 116 de l'échangeur 115.

Il y a ainsi interpénétration de parties respectives de l'échangeur 115 et du réservoir 117, la paroi 120 du réservoir 117 pouvant être en contact avec les ailettes 116 de l'échangeur 115, ou séparée par une couche d'air de faible épaisseur.

Le terme « faible épaisseur » s'entend d'une épaisseur de l'ordre de celle de la paroi du réservoir, par exemple comprise entre 0 et 3 fois l'épaisseur de la paroi 120.

Les autres caractéristiques de l'ensemble d'éclairage 101 sont analogues à celles du premier mode de réalisation, si bien que les autres éléments de l'ensemble ont été désignés par les mêmes références numériques.

## Revendications

1. Projecteur de véhicule automobile comportant :
- au moins une source lumineuse (9),
- un échangeur de chaleur (15 ; 115) associé à ladite source lumineuse (9) pour évacuer de la chaleur produite par ladite source en fonctionnement, et
- une vitre (11) au travers de laquelle est projetée la lumière issue de la source lumineuse (9) en fonctionnement,
**caractérisé en ce que** qu'il comprend en outre un réservoir (17; 117) de fluide d'un dispositif (5) de lavage de la vitre, l'échangeur de chaleur (15; 115) étant agencé dans la région du réservoir (17; 117), de telle sorte à évacuer de la chaleur de la source lumineuse (9) en fonctionnement vers le fluide de lavage contenu dans le réservoir (17; 117), et ainsi chauffer le fluide de lavage au moyen de la chaleur dégagée par la source lumineuse (9) en fonctionnement.

2. Projecteur suivant la revendication 1, **caractérisé en ce qu'**il comprend un boîtier (7) dans lequel sont logés la source lumineuse (9), l'échangeur de chaleur (15; 115), et le réservoir (17; 117).

3. Projecteur suivant la revendication 1 ou 2, **caractérisé en ce** la source lumineuse (9) comprend au moins une diode électroluminescente.

4. Projecteur suivant l'une quelconque des revendications 1 à 3, **caractérisé en ce qu'**il comprend une plaque-support (13) ayant des faces opposées (13A, 13B), sur lesquelles sont fixés respectivement la source lumineuse (9) et l'échangeur de chaleur (15; 115).

5. Projecteur suivant la revendication 4, **caractérisé en ce que** l'échangeur de chaleur (15) est au moins partiellement disposé à l'intérieur du réservoir (17), la plaque-support (13) étant fixée à des parois périphériques (25) du réservoir (17), et définissant une paroi de fermeture du réservoir (17), étanche au fluide de lavage.

6. Projecteur suivant l'une quelconque des revendications 1 à 4, **caractérisé en ce que** l'échangeur de chaleur (115) est agencé extérieurement au réservoir (117), et comprend une série d'ailettes (116) espacées l'une de l'autre, le réservoir (117) ayant une paroi (120) de forme complémentaire de l'échangeur de chaleur (115), coopérant par emboîtement avec la série d'ailettes (116).

7. Ensemble d'éclairage de véhicule automobile, **caractérisé en ce qu'**il comprend un projecteur (1) selon l'une quelconque des revendications 1 à 6, et un dispositif de lavage (5) comportant le réservoir de fluide de lavage (17 ; 117), au moins un gicleur (21) prévu pour être agencé en vis-à-vis de la vitre (11) dudit projecteur, et au moins un conduit (23) d'amenée de fluide de lavage, reliant le réservoir (17 ; 117) au gicleur (21).
